# EUROPÄISCHE PATENTSCHRIFT

(11) **EP 1 375 273 B1**
(45) Veröffentlichungstag und Bekanntmachung des Hinweises auf die Patenterteilung: **23.04.2008**
(21) Anmeldenummer: 03002359.2
(22) Anmeldetag: 04.02.2003
(51) Int. Cl.: B60S 1/32

(54) **Scheibenwischvorrichtung**
Windscreen wiper device
Dispositif d'essuie-glace

(30) Priorität: 21.06.2002 DE 10227781
(43) Veröffentlichungstag der Anmeldung: 02.01.2004
(73) Patentinhaber: ROBERT BOSCH GMBH, 70442 Stuttgart (DE)
(72) Erfinder: Weiler, Michael, 76131 Karlsruhe (DE); Zimmer, Joachim, 77880 Sasbach (DE)

(56) Entgegenhaltungen:
- EP-A- 0 299 708
- WO-A-02/12033
- DE-A1- 10 052 616

## Beschreibung

Die Erfindung betrifft eine Scheibenwischvorrichtung, insbesondere für ein Kraftfahrzeug, mit einem durch einen Antrieb antreibbaren Wischarm, der an eine Scheibe anklappbar und von einer Scheibe wegklappbar ist und an dem ein Wischblatt anordenbar ist, wobei der Wischarm einen dem Antrieb zugewandten Bereich und einen dem Wischblatt zugewandten Bereich hat.

Bisher bekannte Scheibenwischvorrichtungen weisen einen Wischarm auf, der mittels eines Gelenkes von der Scheibe wegklappbar und an die Scheibe anklappbar ist. Damit der Wischarm im an die Scheibe angeklappten Zustand möglichst fest gegen die Scheibe angedrückt wird und damit der Wischarm im von der Scheibe weggeklappten Zustand stabil in dieser weggeklappten Stellung verharrt, weisen die bisher bekannten Wischarme eine Zugfeder auf. Nachteilig bei diesen konventionellen Wischarmen ist, dass diese einen gewissen Montageaufwand erfordern, der somit die Kosten der Scheibenwischvorrichtung erhöht. Außerdem weisen die Wischarme der bisher bekannten Scheibenwischvorrichtungen im an die Scheibe angeklappten Zustand einen relativ großen Abstand zur Windschutzscheibe auf, weshalb die Wischarme seither im ausgeschalteten Zustand der Scheibenwischvorrichtung schlecht unsichtbar versenkt werden können.

Aus der DE-A-10052616 ist ein Wischerarm für eine Scheibenwischvorrichtung gemäß dem Oberbegriff des Anspruchs 1 bekannt.

Weiters ist aus der EP-A-0299708 ein einstückiger Wischerarm für eine Scheibenwischvorrichtung bekannt, der einstückig aus Kunststoff ausgebildet ist, wobei ein Torsionsfederelement vorgesehen ist.

Die Erfindung hat die Aufgabe, eine Scheibenwischvorrichtung der eingangs genannten Art dahingehend zu verbessern, dass die Anzahl der für den Wischarm benötigten Bauteile reduziert wird.

Die Erfindung löst die gestellte Aufgabe durch eine Scheibenwischvorrichtung der eingangs genannten Art, die erfindungsgemäß dadurch gekennzeichnet ist, dass der dem Antrieb zugewandte Bereich und der dem Wischblatt zugewandte Bereich des Wischarms mit zwei Torsionsfederelementen verbunden ist, wobei die Torsionsfederelemente mit zueinander entgegen gesetzten Torsionswinkeln versehen sind und die Torsionsfederelemente einen Rechteckquerschnitt aufweisen, dessen Breite größer als seine Dicke ist, so dass die Torsionsfederelemente in Längsrichtung zur Scheibe hin gekrümmt oder von der Scheibe weg gekrümmt sind. Somit ist zukünftig die Anzahl der für den Wischarm erforderlichen Bauteile auf ein Minimum reduziert. Der Wischarm weist somit zukünftig nur noch den dem Antrieb zugewandten Bereich und den dem Wischblatt zugewandten Bereich sowie die beiden Torsionsfederelemente auf. Das bisher erforderliche Gelenk zum Wegklappen des Wischarmes von der Scheibe bzw. zum Anklappen des Wischarmes an die Scheibe kann somit genauso wie die bisher erforderliche Zugfeder entfallen. Ein Verschleiß des Wischarmes durch im Laufe der Zeit häufiges Hin- und Wegklappen des Wischarmes an die Scheibe und von der Scheibe weg ist zukünftig ausgeschlossen, da die Gelenkreibung entfällt. Der Montageaufwand des Wischarmes wird damit auf ganz wenige Montageschritte reduziert, die sich mit einfachsten Mitteln sehr kostengünstig automatisieren lassen. Ferner lässt sich der Wischarm der erfindungsgemäßen Scheibenwischvorrichtung als eine relativ flache Baueinheit gestalten, so dass er auch unsichtbar beispielsweise in der A-Säule eines Fahrzeuges versenkt werden kann, wodurch der gesamte ästhetische Eindruck des Fahrzeuges aufgewertet wird.

Wenn die beiden Torsionsfederelemente voneinander beabstandet sind, wird das Wischblatt im an die Scheibe angeklappten Zustand optimal gegen die Scheibe gepresst, und im von der Scheibe weggeklappten Zustand wird der Wischarm mit einer maximalen Haltekraft von der Scheibe weggehalten.

Die beiden Torsionsfederelemente können an ihren Endbereichen jeweils durch ein Verbindungselement miteinander verbunden sein, so dass die Torsionsfederelemente und die Verbindungselemente ein einziges Federelement bilden, wodurch die Anzahl der erforderlichen Bauteile des Wischarms und damit die Montageschritte zu seiner Herstellung noch weiter reduziert werden.

Ein Verbindungselement des einzigen Federelementes kann einteilig und das andere Verbindungselement zweiteilig sein. Dabei können die zwei Torsionsfederelemente mit ihrem einen Ende V-förmig an dem einteiligen Verbindungselement angeordnet sein und jeweils ein Teil des zweiteiligen Verbindungselementes am anderen Ende eines der Torsionsfederelemente angebracht sein. Bei dieser konstruktiven Ausgestaltung der Torsionsfederelemente und der Verbindungselemente ist es nicht erforderlich, dass die Torsionsfederelemente, die im angeklappten Zustand des Wischarmes die Anpresskraft des Wischarmes an die Scheibe erzeugen und im weggeklappten Zustand des Wischarmes die weggeklappte Stellung des Wischarmes stabilisieren, in einem extra Fertigungsschritt tordiert werden müssen. Die Torsion der Torsionsfederelemente wird bei dieser konstruktiven Ausgestaltung durch Gegeneinanderdrücken der V-förmig auseinander laufenden Torsionsfederelemente erzielt, da die Breite der Torsionsfederelemente größer ist als deren Dicke. Die Torsionsfederelemente besitzen natürlicherweise die Tendenz, sich in Richtung des geringsten Widerstandsmomentes zu verbiegen. Das geringste Widerstandsmoment weisen die Torsionsfederelemente über ihrer Dicke auf, so dass sie sich, wenn man sie quer zu ihrer Dicke gegeneinander drückt, um ihre Dikkenmittellinie verbiegen, was einer Biegelinie in Längsrichtung der Torsionsfederelemente entspricht.

Wenn das zweiteilige Verbindungselement Befestigungsmittel aufweist, können die Enden der V-förmig auseinander laufenden Torsionsfederelemente ohne großen Aufwand zusammengehalten werden, nachdem diese gegeneinander gedrückt wurden. Wenn ein Verbindungselement in seinem Mittelbereich mit einer Kröpfung versehen ist, können durch Erzeugung der Kröpfung die zueinander entgegen gesetzten Torsionswinkel fertigungstechnisch sehr einfach hergestellt werden.

Ebenfalls sehr kostengünstig ist es, wenn die Torsionsfederelemente und/oder das Federelement als ein Stanzteil oder alternativ als ein Faser verstärktes Kunststoffteil hergestellt werden.

Die Verbindungselemente des Federelements können einteilig sein, und das Federelement kann als ein längsgebogenes Bauteil mit um ihre Längsachse tordierten Torsionsfederelementen (41, 42) hergestellt sein. Ein Federelement mit diesen Merkmalen lässt sich beispielsweise in einer Stanzpresse als ein Stanzbiegeteil in einem Arbeitsschritt herstellen.

Wenn der dem Antrieb zugewandte Bereich und der dem Wischblatt zugewandte Bereich des Wischarmes jeweils eine Öffnung zur Aufnahme des Federelementes aufweist, oder diese Bereiche jeweils mit zwei Öffnungen zur Aufnahme der beiden Torsionsfederelemente versehen sind, kann der gesamte Wischarm durch einfaches Zusammenstecken des Federelementes mit dem dem Antrieb zugewandten Bereich und dem dem Wischblatt zugewandten Bereich bzw. durch einfaches Zusammenstecken der Torsionsfederelemente mit dem dem Antrieb zugewandten Bereich und dem dem Wischblatt zugewandten Bereich schnell montiert werden.

Um ein Herausrutschen des Federelementes oder der Torsionsfederelemente aus den Aufnahmeöffnungen des dem Antrieb zugewandten Bereiches und des dem Wischblatt zugewandten Bereiches zu verhindern, kann das Federelement oder die Torsionsfederelemente in den Öffnungen zur Aufnahme des Federelementes oder der Torsionsfederelemente in den dem Antrieb zugewandten Bereich und/oder in den dem Wischblatt zugewandten Bereich eingeclipst werden. Nachfolgend werden verschiedene Ausführungsbeispiele anhand der beiliegenden Zeichnung näher erläutert.

Im Einzelnen zeigen:
- Fig. 1 A: eine perspektivische Ansicht eines von der Scheibe weggeklappten Wischarmes;
- Fig. 1 B: eine perspektivische Ansicht des Wischarmes aus Fig. 1 A im an die Scheibe angeklappten Zustand;
- Fig. 1 C: eine perspektivische Schnittansicht durch den Wischarm aus Fig. 1 A;
- Fig. 2 A: eine Draufsicht auf ein ausgestanztes Federelement;
- Fig. 2 B: eine Vorderansicht auf das Federelement auf Fig. 2 A;
- Fig. 2 C: eine Draufsicht auf das Federelement aus Fig. 2 A mit gegeneinander gedrückten Torsionsfederelementen;
- Fig. 2 D: eine Vorderansicht des Federelementes aus Fig. 2 C;
- Fig. 3 A: einen Querschnitt durch die Torsionsfederelemente des Federelementes aus Fig. 2 C im an die Scheibe angeklappten Zustand;
- Fig. 3 B: einen Längsschnitt durch das Federelement aus Fig. 2 C im an die Scheibe angeklappten Zustand;
- Fig. 3 C: einen Querschnitt durch die Torsionsfederelemente aus Fig. 2 C im von der Scheibe weggeklappten Zustand;
- Fig. 3 D: einen Längsschnitt durch das Federelement aus Fig. 2 C im von der Scheibe weggeklappten Zustand;
- Fig. 4 A: eine perspektivische Ansicht auf eine zweite Ausführungsform eines Federelementes;
- Fig. 4 B: eine perspektivische Ansicht auf das mit einer Längsbiegung versehene Federelement aus Fig. 4 A;
- Fig. 4 C: eine perspektivische Schnittansicht durch das in Fig. 4 B dargestellte Federelement;
- Fig. 5 A: eine perspektivische Ansicht auf eine dritte Ausführungsform eines Federelementes;
- Fig. 5 B: eine perspektivische Ansicht des mit einer Längsbiegung versehenen Federelementes aus 5 A;
- Fig. 6 A: eine Draufsicht auf eine vierte Ausführungsform eines Federelementes;
- Fig. 6 B: eine perspektivische Ansicht des längs gebogenen Federelementes aus Fig. 6 A;
- Fig. 7 A: eine Draufsicht auf eine fünfte Ausführungsform eines Federelementes;
- Fig. 7 B: eine perspektivische Ansicht des längs gebogenen Federelements aus Fig. 7 A.

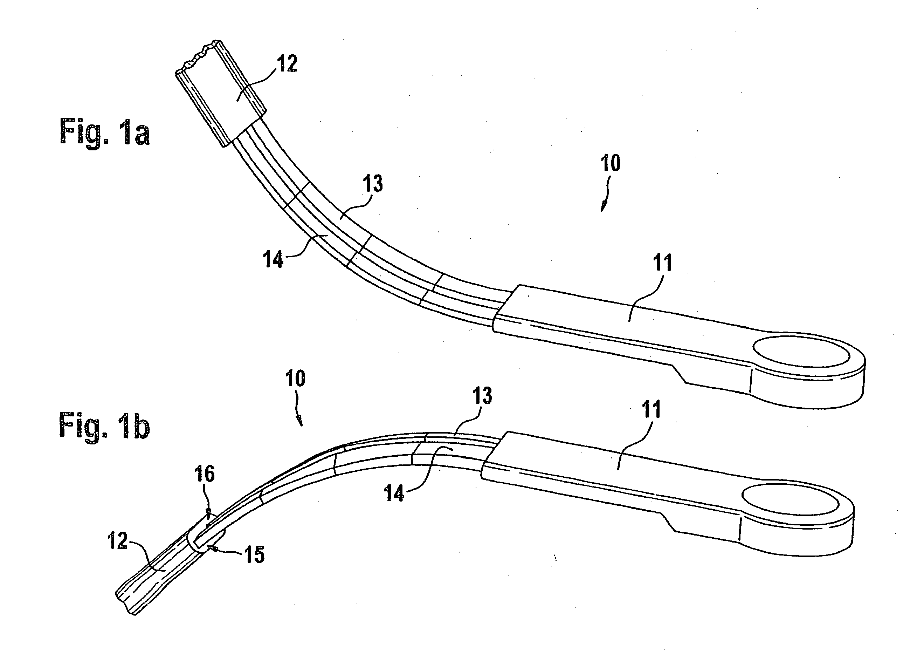

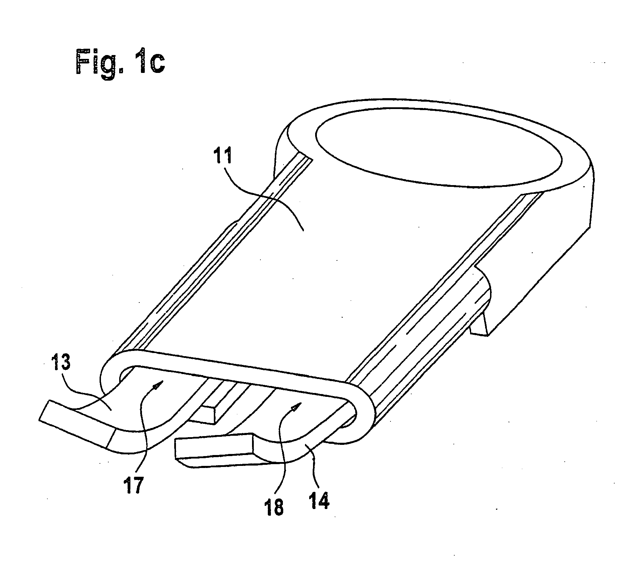

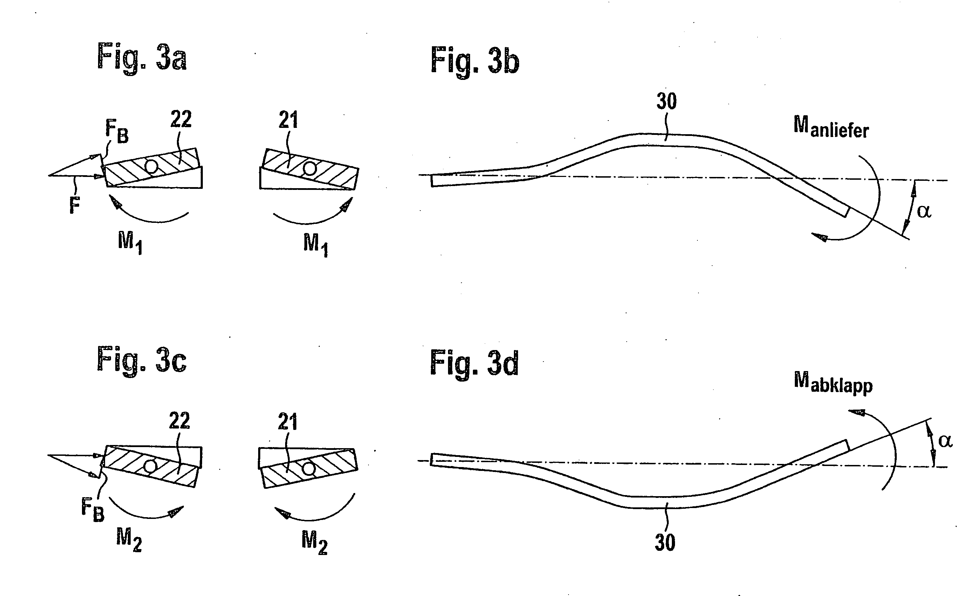

Fig. 1 A zeigt einen Wischarm 10 im von der Scheibe weggeklappten Zustand, wobei die Scheibe hier nicht näher dargestellt ist. Der Wischarm 10 weist einen einem ebenfalls hier nicht näher dargestellten Antrieb zugewandten Bereich 11 und einen einem hier ebenfalls nicht näher dargestellten Wischblatt zugewandten Bereich 12 auf. Zwischen den Bereichen 11 und 12 befinden sich zwei voneinander beabstandete Torsionsfederelemente 13. Die Torsionsfederelemente 13 weisen zueinander entgegen gesetzte Torsionswinkel auf, so dass die Torsionsfederelemente 13 um ihre Längsachse verdreht sind (siehe Fig. 1 C). Durch die beiden entgegen gesetzten Torsionswinkel der Torsionsfederelemente 13 erfahren die Torsionsfederelemente 13 ein Biegemoment in ihrer Längsrichtung, so dass der Wischarm 10 die in Fig. 1 A bzw. in Fig. 1 B dargestellte Längsbiegung erhält. Klappt man den von der Scheibe weggeklappten Wischarm 10 (siehe Fig. 1 A) gegen die Scheibe (siehe Fig. 1 B), so werden die zueinander entgegen gesetzten Torsionswinkel der Torsionsfederelemente 13 und 14 gegeneinander vertauscht, das heißt das Torsionsfederelement 13 weist im von der Scheibe weggeklappten Zustand denselben Torsionswinkel auf wie das Torsionsfederelement 14 im an die Scheibe angeklappten Zustand und umgekehrt (siehe Fig. 3 A und 3 C). Die Torsionsfederelemente 13 und 14 sind in die Bereiche 11 und 12 eingesteckt. Zu diesem Zwecke weisen die Bereiche 11 und 12 Öffnungen 15, 16, 17 und 18 auf (siehe Fig. 1 B und 1 C). Durch hier nicht näher dargestellte Clipverbindungen können die Torsionsfederelemente 13 und 14 am Herausrutschen aus den Bereichen 11 und 12 gehindert werden.

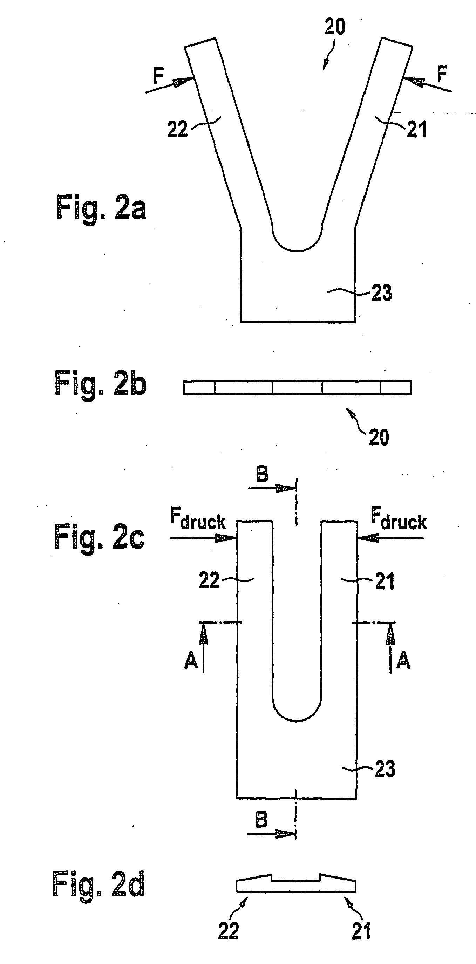

Fig. 2 A zeigt ein Federelement 20 mit Torsionsfederelementen 21 und 22, die durch ein Verbindungselement 23 miteinander verbunden sind. Werden die Torsionsfederelemente 21 und 22 durch eine Kraft F gegeneinander gedrückt (siehe Fig. 2 C), so tordieren die Torsionsfederelemente (siehe Fig. 2 D, 3 A und 3 C). Die Torsion der Torsionsfederelemente 21 und 22 resultiert daraus, dass die Torsionsfederelemente 21 und 22 einen rechteckigen Querschnitt aufweisen (Fig. 3 A), dessen Breite größer ist als seine Dicke. Somit weisen die Torsionsfederelemente in Dickenrichtung ein geringeres Widerstandsmoment auf als in Richtung ihrer Breite, so dass die Kraft F die Torsionsfederelemente 21 und 22 aus ihrer nicht tordierten Lage, die beim Angreifen der Kraft F instabil wird, in die tordierte Lage verformt. Aufgrund der Torsionsverformung der Torsionsfederelemente 21 und 22 erfahren die Torsionsfederelemente 21 und 22 durch eine senkrecht auf die Torsionsfederelemente 21 und 22 wirkende Kraftkomponente F_{B} eine Biegung in Längsrichtung (Fig. 3 B, 3 D). Wird der an die Scheibe angeklappte Wischarm (Fig. 3 B) von der Scheibe weggeklappt (Fig. 3 D), so werden die Torsionswinkel der Torsionsfederelemente 21 und 22 gegeneinander vertauscht (siehe Fig. 3 A und 3 C), so dass die senkrecht auf die Torsionsfederelemente 21 und 22 wirkende Kraftkomponente F_{B} nun den Wischarm 30 in seiner Längsrichtung nach oben biegt und dieser in der von der Scheibe weggeklappten Stellung stabil verharren kann. Je größer die Kraftkomponente F_{B} ist, umso fester wird der Wischarm 30 gegen die Scheibe angepresst, wodurch die Wischleistung der Scheibenwischvorrichtung erhöht wird. Je größer die Kraftkomponente F_{B} ist, umso stabiler verharrt auch der Wischarm 30 in seiner von der Scheibe weggeklappten Position.

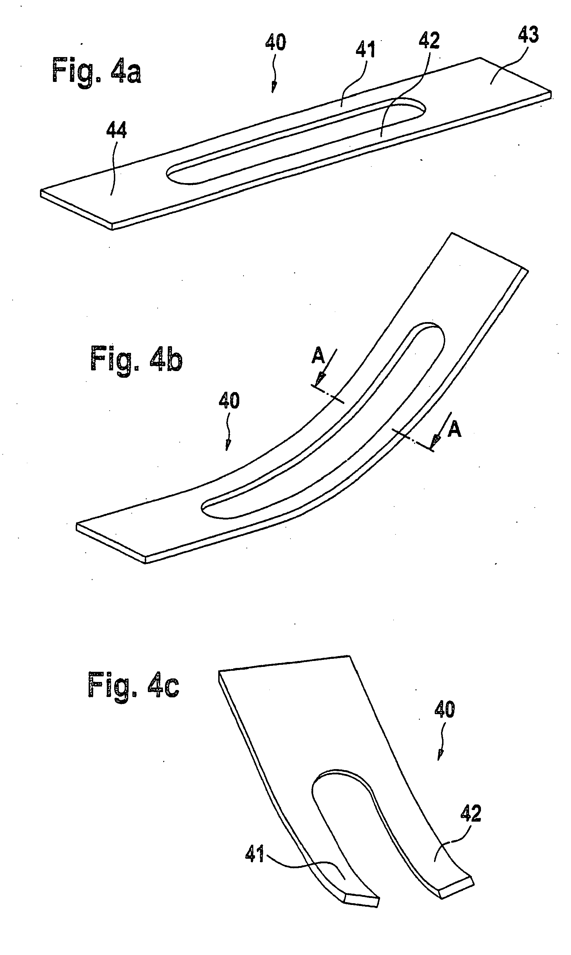

Fig. 4 A zeigt ein Federelement 40 mit zwei Torsionsfederelementen 41 und 42, die an ihren Endbereichen durch Verbindungselemente 43 und 44 miteinander verbunden sind. Das Federelement 40 kann sehr einfach als ein Stanzbiegeteil hergestellt werden. Beim Herstellvorgang werden die der Torsionsfederelemente 41 und 42 nach dem Ausstanzen des Federelementes 40 um zueinander entgegen gesetzte Torsionswinkel um ihre Längsachse tordiert (Fig. 4 C) und das Federelement 40 entlang seiner Länge gebogen (Fig. 4 B) .

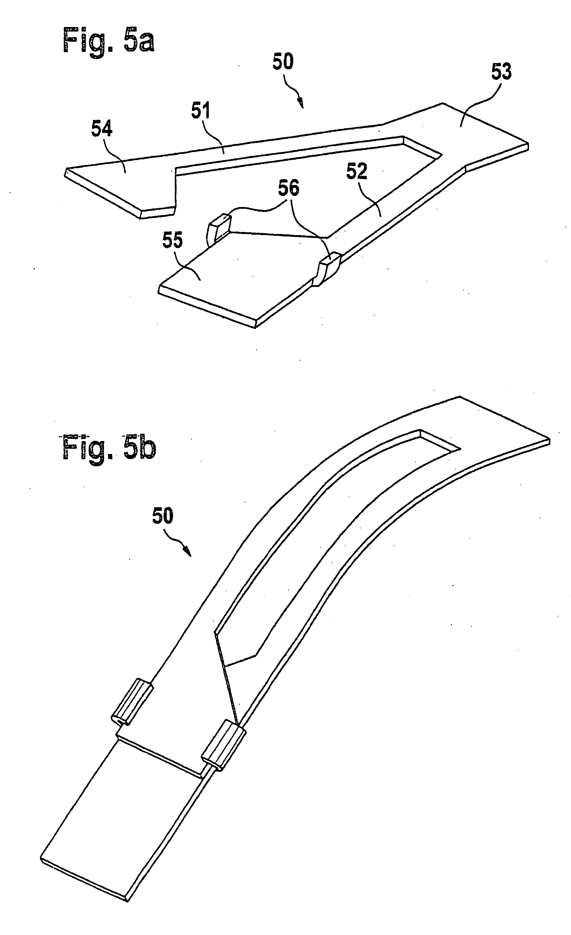

Fig. 5 A zeigt ein Federelement 50 mit Torsionsfederelementen 51 und 52. Die Torsionsfederelemente 51 und 52 sind an ihrem einen Endbereich V-förmig durch ein Verbindungselement 53 miteinander verbunden. Das Torsionsfederelement 51 ist an seinem anderen Ende mit einem Verbindungselementteil 54 und das Torsionsfederelement 52 ist an seinem anderen Ende einem Verbindungselementteil 55 verbunden. Das Verbindungselementteil 55 besitzt Hakenelemente 56, so dass nach dem Gegeneinanderdrücken der Torsionsfederelemente 51 und 52 das Verbindungselementteil 54 in das Verbindungselementteil 55 eingehängt werden kann, wodurch die durch das Gegeneinanderdrücken der Torsionsfederelemente 51 und 52 entstandene Torsion der Torsionsfederelemente 51 und 52 und die daraus resultierende Längsbiegung des Federelements 50 erhalten bleibt (siehe Fig. 5 B).

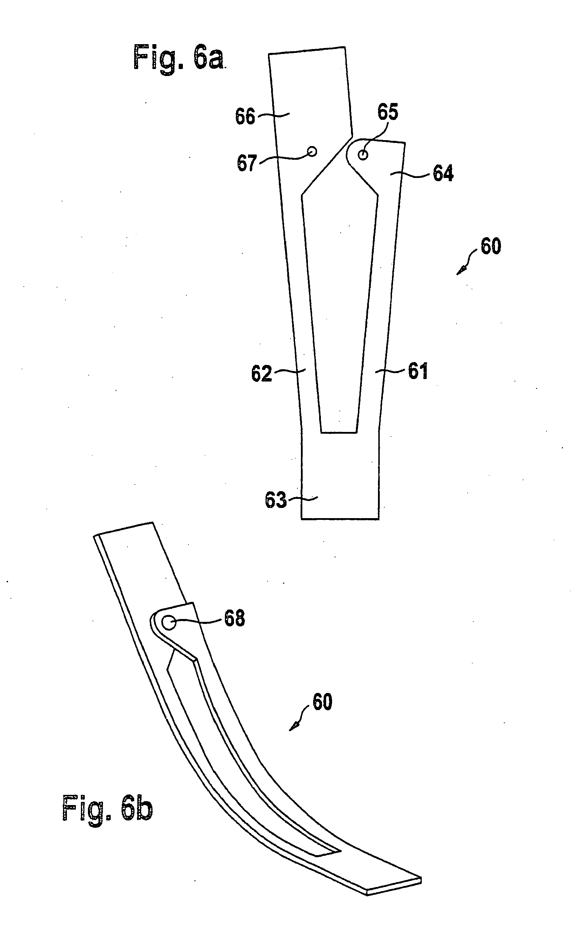

Fig. 6 A zeigt ein Federelement 60 mit Torsionsfederelementen 61 und 62, die an ihrem einen Endbereich V-förmig mit einem Verbindungselement 63 verbunden sind. Das Torsionsfederelement 61 weist an seinem anderen Endbereich ein Verbindungselementteil 64 auf, das mit einem Loch 65 versehen ist. Das Torsionsfederelement 62 weist an seinem anderen Ende ein Verbindungselementteil 66 auf, das mit einem Loch 67 verbunden ist. Durch Gegeneinanderdrücken der Torsionsfederelemente 61 und 62 können die Löcher 65 und 67 zur Überdeckung gebracht werden, so dass ein Verbindungsmittel 68, beispielsweise eine Niete, eine Schraube oder sonstige dem Fachmann bekannte Befestigungsmittel durch die sich überdeckenden Löcher 65 und 67 hindurch gesteckt werden können. Auf diese Weise wird die durch das Gegeneinanderdrücken der Torsionsfederelemente 61 und 62 erzeugte Torsion der Torsionsfederelemente 61 und 62 und die daraus resultierende Längsbiegung des Federelements 60 beibehalten (siehe Fig. 6B).

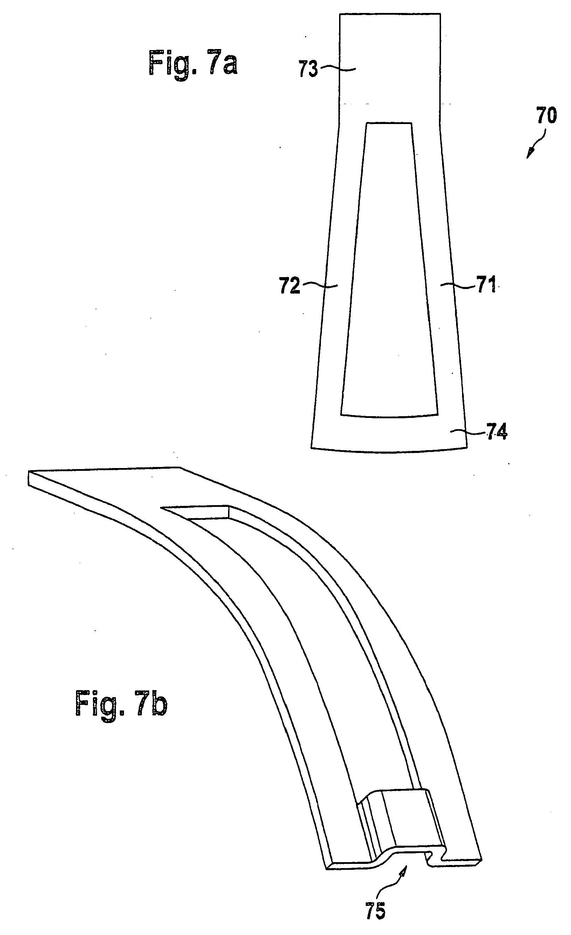

Fig. 7 A zeigt ein Federelement 70 mit zwei Torsionsfederelementen 71 und 72, die durch Verbindungselemente 73 und 74 miteinander verbunden sind. Das Verbindungselement 74 wird bei der Herstellung des Federelementes 70 in seinem Mittelbereich mit einer Kröpfung 75 (Fig. 7 B) versehen, wodurch die V-förmig an dem Verbindungselement 73 angeordneten Torsionsfederelement 71 und 72 gegeneinander gedrückt werden, so dass die Torsionsfederelemente 71 und 72 eine Torsion erfahren und das Federelement 70 in seiner Längsrichtung gebogen wird (Fig. 7 B). Da das Federelement 70 kostengünstig als Stanzteil hergestellt werden kann, bietet es sich an, die Kröpfung 75 ebenfalls im Stanzwerkzeug herzustellen, wodurch die Herstellung des Federelementes 70 erheblich vereinfacht wird.

## Patentansprüche

1. Scheibenwischvorrichtung, insbesondere für ein Kraftfahrzeug, mit einem durch einen Antrieb antreibbaren Wischarm (10, 30), der an eine Scheibe anklappbar und von einer Scheibe wegklappbar ist und an dem ein Wischblatt anordenbar ist, wobei der Wischarm (10, 30) einen dem Antrieb zugewandten Bereich (11) und einen dem Wischblatt zugewandten Bereich (12) hat, wobei der dem Antrieb zugewandte Bereich (11) und der dem Wischblatt zugewandte Bereich (12) des Wischarms (10, 30) mit zwei Torsionsfederelementen (13, 14, 21, 22, 41, 42, 51, 52, 61, 62, 71, 72) verbunden sind, wobei die Torsionsfederelemente (13, 14, 21, 22, 41, 42, 51, 52, 61, 62, 71, 72) mit zueinander entgegen gesetzten Torsionswinkeln versehen sind und die Torsionsfederelemente (13, 14, 21, 22, 41, 42, 51, 52, 61, 62, 71, 72) einen Rechteckquerschnitt aufweisen, dessen Breite größer als seine Dicke ist, so dass die Torsionsfederelemente (13, 14, 21, 22, 41, 42, 51, 52, 61, 62, 71, 72) in Längsrichtung zur Scheibe hin gekrümmt oder von der Scheibe weg gekrümmt sind und wobei die beiden Torsionsfederelemente (13, 14, 21, 22, 41, 42, 51, 52, 61, 62, 71, 72) an ihren Endbereichen jeweils durch ein Verbindungselement (23, 43, 44, 53, 54, 55, 63, 64, 66, 73, 74) miteinander verbunden sind, so dass die Torsionsfederelemente (13, 14, 21, 22, 41, 42, 51, 52, 61, 62, 71, 72) und die Verbindungselemente (23, 43, 44, 53, 54, 55, 63, 64, 66, 73, 74) ein einziges Federelement (20, 40, 50, 60, 70) bilden, **dadurch gekennzeichnet, daß** der dem Antrieb zugewandte Bereich (11) und der dem Wischblatt zugewandte Bereich (12) des Wischarmes (10) jeweils eine Öffnung zur Aufnahme des Federelementes (20, 40, 50, 60, 70) aufweisen oder diese Bereiche (11, 12) jeweils mit zwei Öffnungen (15, 16, 17, 18) zur Aufnahme der beiden Torsionsfederelemente (13, 14) versehen sind.

2. Scheibenwischvorrichtung nach Anspruch 2, **dadurch gekennzeichnet, dass** ein Verbindungselement (53, 63) einteilig und das andere Verbindungselement zweiteilig ist und die zwei Torsionsfederelemente (51, 52, 61, 62) mit ihrem einen Ende V-förmig an dem einteiligen Verbindungselement (53, 63) angeordnet sind und jeweils ein Teil (54, 55, 64, 66) des zweiteiligen Verbindungselementes am anderen Ende der Torsionsfederelemente (51, 52, 61, 62) angebracht ist.

3. Scheibenwischvorrichtung nach Anspruch 3, **dadurch gekennzeichnet, dass** das zweiteilige Verbindungselement Befestigungsmittel (56, 68) aufweist, um die Enden der V-förmig auseinander laufenden Torsionsfederelemente (51, 52, 61, 62) zusammenzuhalten, nachdem diese gegeneinander gedrückt wurden.

4. Scheibenwischvorrichtung nach einem der Ansprüche 2 bis 4, **dadurch gekennzeichnet, dass** ein Verbindungselement (74) in seinem Mittelbereich mit einer Kröpfung (75) versehen ist.

5. Scheibenwischvorrichtung nach Anspruch 2, **dadurch gekennzeichnet, dass** die Verbindungselemente (43, 44) des Federelements (40) einteilig sind und das Federelement (40) als ein längsgebogenes Bauteil mit um ihre Längsachse tordierten Torsionsfederelementen (41, 42) hergestellt ist.

6. Scheibenwischvorrichtung nach einem der Ansprüche 1 bis 6, **dadurch gekennzeichnet, dass** die Torsionsfederelemente (13, 14) und/oder das Federelement (20, 40, 50, 60, 70) als ein Stanzteil herstellbar sind.

7. Scheibenwischvorrichtung nach einem der Ansprüche 1 bis 6, **dadurch gekennzeichnet, dass** die Torsionsfederelemente (13, 14) und/oder das Federelement (20, 40, 50, 60, 70) als ein Faser verstärktes Kunststoffteil herstellbar sind.

8. Scheibenwischvorrichtung nach einem der Ansprüche 1 bis 8, **dadurch gekennzeichnet, dass** das Federelement (20, 40, 50, 60, 70) oder die Torsionsfederelemente (13, 14) in den Öffnungen (15, 16, 17, 18) zur Aufnahme des Federelementes (20, 40, 50, 60, 70) oder der Torsionsfederelemente (13, 14) in den dem Antrieb zugewandten Bereich (11) und/oder in den dem Wischblatt zugewandten Bereich (12) einclipsbar sind.

## Claims

1. Windscreen wiper device, in particular for a motor vehicle, with a wiper arm (10, 30) which can be driven by a drive, can be folded onto a windscreen and can be folded away from a windscreen and on which a wiper blade can be arranged, wherein the wiper arm (10, 30) has a region (11) which faces the drive and a region (12) which faces the wiper blade, wherein that region (11) of the wiper arm (10, 30) which faces the drive and that region (12) of the same which faces the wiper blade are connected to two torsional spring elements (13, 14, 21, 22, 41, 42, 51, 52, 61, 62, 71, 72), wherein the torsion spring elements (13, 14, 21, 22, 41, 42, 51, 52, 61, 62, 71, 72) are provided with mutually opposed torsion angles, and the torsion spring elements (13, 14, 21, 22, 41, 42, 51, 52, 61, 62, 71, 72) have a rectangular cross section, the width of which is greater than its thickness such that the torsion spring elements (13, 14, 21, 22, 41, 42, 51, 52, 61, 62, 71, 72) are curved in the longitudinal direction towards the windscreen or are curved away from the windscreen, and wherein the two torsion spring elements (13, 14, 21, 22, 41, 42, 51, 52, 61, 62, 71, 72) are connected to each other at their end regions by a respective connecting element (23, 43, 44, 53, 54, 55, 63, 64, 66, 73, 74) such that the torsion spring elements (13, 14, 21, 22, 41, 42, 51, 52, 61, 62, 71, 72) and the connecting elements (23, 43, 44, 53, 54, 55, 63, 64, 66, 73, 74) form a single spring element (20, 40, 50, 60, 70), **characterized in that that** region (11) of the wiper arm (10) which faces the drive and that region (12) of the same which faces the wiper blade in each case have an opening for receiving the spring element (20, 40, 50, 60, 70) or these regions (11, 12) are in each case provided with two openings (15, 16, 17, 18) for receiving the two torsion spring elements (13, 14).

2. Windscreen wiper device according to Claim 1, **characterized in that** one connecting element (53, 63) is in a single part and the other connecting element is in two parts, and the two torsion spring elements (51, 52, 61, 62) are arranged at their one end in a V-shaped manner on the single-part connecting element (53, 63), and in each case one part (54, 55, 64, 66) of the two-part connecting element is fitted to the other end of the torsion spring elements (51, 52, 61, 62).

3. Windscreen wiper device according to Claim 2, **characterized in that** the two-part connecting element has fastening means (56, 68) in order to hold together the ends of the torsion spring elements (51, 52, 61, 62), which run apart in a V-shaped manner, after said torsion spring elements have been pressed against each other.

4. Windscreen wiper device according to either of Claims 2 and 3, **characterized in that** one connecting element (74) is provided in its central region with a bent portion (75).

5. Windscreen wiper device according to Claim 2, **characterized in that** the connecting elements (43, 44) of the spring element (40) are in a single part, and the spring element (40) is produced as a component which is bent longitudinally and has torsion spring elements (41, 42) twisted about their longitudinal axis.

6. Windscreen wiper device according to one of Claims 1 to 5, **characterized in that** the torsion spring elements (13, 14) and/or the spring element (20, 40, 50, 60, 70) can be produced as a punched part.

7. Windscreen wiper device according to one of Claims 1 to 6, **characterized in that** the torsion spring elements (13, 14) and/or the spring element (20, 40, 50, 60, 70) can be produced as a fibre-reinforced plastic part.

8. Windscreen wiper device according to one of Claims 1 to 7, **characterized in that** the spring element (20, 40, 50, 60, 70) or the torsion spring elements (13, 14) can be clipped into the region (11) which faces the drive and/or into the region (12) which faces the wiper blade in the openings (15, 16, 17, 18) for receiving the spring element (20, 40, 50, 60, 70) or the torsion spring elements (13, 14).

## Revendications

1. Dispositif d'essuie-glace notamment pour un véhicule automobile ayant un bras d'essuie-glace (10, 30) entraîné par un moyen d'entraînement, ce bras pouvant être rabattu contre une vitre ou en être écarté par basculement, et il porte un balai d'essuie-glace,
le bras d'essuie-glace (10, 30) ayant une zone (11) tournée vers le moyen d'entraînement et une zone (12) tournée vers le balai d'essuie-glace,
la zone (11) tournée vers le moyen d'entraînement et la zone (12) du bras (10, 30) tournée vers le balai d'essuie-glace étant reliées à deux éléments de ressort de torsion (13, 14, 21, 22, 41, 42, 51, 52, 61, 62, 71, 72),
les éléments de ressort de torsion (13, 14, 21, 22, 41, 42, 51, 52, 61, 62, 71, 72) ayant des angles de torsion opposés l'un à l'autre et les éléments de ressort de torsion (13, 14, 21, 22, 41, 42, 51, 52, 61, 62, 71, 72) ont une section rectangulaire dont la largeur est supérieure à l'épaisseur pour que les éléments de ressort de torsion (13, 14, 21, 22, 41, 42, 51, 52, 61, 62, 71, 72) soient cintrés dans la direction longitudinale par rapport à la vitre ou à l'opposé de la vitre et les deux éléments de ressort de torsion (13, 14, 21, 22, 41, 42, 51, 52, 61, 62, 71, 72) étant reliés au niveau de leurs zones d'extrémités par un élément de liaison (23, 43, 44, 53, 54, 55, 63, 64, 66, 73, 74), de façon que les éléments de ressort de torsion (13, 14, 21, 22, 41, 42, 51, 52, 61, 62, 71, 72) et les éléments de liaison (23, 43, 44, 53, 54, 55, 63, 64, 66, 73, 74) constituent un unique élément de ressort (20, 40, 50, 60, 70).

2. Dispositif d'essuie-glace selon la revendication 1,
**caractérisé en ce qu'**
un élément de liaison (53, 63) est en une partie et l'autre élément de liaison est en deux parties et les deux éléments de ressort de torsion (51, 52, 61, 62) ont une de leurs extrémités, en forme de V sur l'élément de liaison (53, 63) en une seule partie et une partie (54, 55, 64, 66) respective de l'élément de liaison en deux parties est à l'autre extrémité des éléments de ressort de torsion (51, 52, 61, 62).

3. Dispositif d'essuie-glace selon la revendication 2,
**caractérisé en ce que**
l'élément de liaison en deux parties comporte des moyens de fixation (56, 68) pour maintenir réunies les extrémités des éléments de ressort de torsion (51, 52, 61, 62) qui s'écartent en forme de V après que ces éléments aient été comprimés l'un par rapport à l'autre.

4. Dispositif d'essuie-glace selon l'une des revendications 1 à 3,
**caractérisé en ce qu'**
un élément de liaison (74) comporte dans sa zone centrale une partie coudée (75).

5. Dispositif d'essuie-glace selon la revendication 1,
**caractérisé en ce que**
les éléments de liaison (43, 44) de l'élément de ressort (40) sont en une seule partie et l'élément de ressort (40) est fabriqué comme un composant courbé longitudinalement avec des éléments de ressort (41, 42) en torsion autour de leur axe longitudinal.

6. Dispositif d'essuie-glace selon l'une des revendications 1 à 5,
**caractérisé en ce que**
les éléments de ressort de torsion (13, 14) et/ou l'élément de ressort (20, 40, 50, 60, 70) sont fabriqués sous la forme de pièces embouties.

7. Dispositif d'essuie-glace selon l'une des revendications 1 à 5,
**caractérisé en ce que**
les éléments de ressort de torsion (13, 14) et/ou l'élément de ressort (20, 40, 50, 60, 70) sont fabriqués comme pièces en matière plastique renforcée par des fibres.

8. Dispositif d'essuie-glace selon l'une des revendications 1 à 7,
**caractérisé en ce que**
l'élément de ressort (20, 40, 50, 60, 70) ou les éléments de ressort de torsion (13, 14) sont enclipsés dans des ouvertures (15, 16, 17, 18) recevant l'élément de ressort (20, 40, 50, 60, 70) ou les éléments de ressort de torsion (13, 14) dans la zone (11) tournée vers le moyen d'entraînement et/ou dans la zone (12) tournée vers le balai d'essuie-glace.
